# EUROPÄISCHE PATENTSCHRIFT

(11) **EP 3 882 668 B1**
(45) Veröffentlichungstag und Bekanntmachung des Hinweises auf die Patenterteilung: **10.08.2022**
(21) Anmeldenummer: 21157283.9
(22) Anmeldetag: 16.02.2021
(51) Int. Cl.: G01S 19/48, G01S 19/39

(54) **VERFAHREN ZUM FESTSTELLEN EINER SICHEREN POSITION EINES FAHRZEUGS**
METHOD FOR DETERMINING A SAFE POSITION OF A VEHICLE
PROCÉDÉ DE DÉTERMINATION D'UNE POSITION SÛRE D'UN VÉHICULE

(30) Priorität: 19.03.2020 DE 102020203511
(43) Veröffentlichungstag der Anmeldung: 22.09.2021
(73) Patentinhaber: ZF Friedrichshafen AG, 88046 Friedrichshafen (DE)
(72) Erfinder: Tappeiner, Michael, 88048 Friedrichshafen (DE)
(74) Vertreter: ZF Friedrichshafen AG

(56) Entgegenhaltungen:
- DE-A1-102018 205 142
- US-A1- 2019 320 061
- DREVELLE VINCENT ET AL: "Localization Confidence Domains via Set Inversion on Short-Term Trajectory", IEEE TRANSACTIONS ON ROBOTICS, IEEE SERVICE CENTER, PISCATAWAY, NJ, US, Bd. 29, Nr. 5, 1. Oktober 2013 (2013-10-01), Seiten 1244-1256, XP011528630, ISSN: 1552-3098, DOI: 10.1109/TRO.2013.2262776 [gefunden am 2013-09-30]

## Beschreibung

Die vorliegende Erfindung betrifft ein Verfahren zum Feststellen einer sicheren Position eines Fahrzeugs, eine Steuereinrichtung, ein Computerprogrammprodukt und ein Fahrzeug.

Automatisierte Fahrzeuge müssen für bestimmte Aufgaben ihre absolute Position auf einer Landkarte bestimmen können. Für die Erkennung der Position gibt es verschiedene Lösungen, z. B. GNSS-Sensoren und im Boden eingelassene induktive Transponder, Magneten oder Leitdrähte. Zusätzlich lässt sich die Position über Odometrie ermitteln. Diese Messprinzipien unterscheiden sich in der Genauigkeit und Verlässlichkeit. Es werden häufig verschiedene Sensoren zur Positionsermittlung genutzt mit dem Ziel die Güte der Positionserfassung zu erhöhen. Im Falle einer fehlerhaften Lokalisierung gibt es im Umfeld von automatisierten Fahrzeugen Barrieren oder sonstige feststehende Schutzeinrichtungen, die das Fahrzeug daran hindern, den Bereich zu verlassen, in welchem es sich automatisiert bewegen darf.

In einem Umfeld, in welchem sich der Betriebsbereich eines automatisierten Fahrzeugs nicht sicher baulich trennen lässt von einem Nicht-Betriebsbereich, wird eine sichere Lokalisierung benötigt. Dies ist z. B. bei großen, schweren und/oder schnell fahrenden Fahrzeugen der Fall. Solch ein Fahrzeug kann aufgrund seines langen Bremswegs eine feste Barriere nicht früh genug sicher erkennen. Zusätzlich könnte ein solches Fahrzeug die Barriere durchstoßen und in einen Nicht-Betriebsbereich eindringen und ggf. Personen gefährden.

Für die Lokalisierung von Fahrzeugen gibt es die bereits erwähnten verschiedenen Systeme. Keines dieser Systeme stellt eine sichere Position entsprechend der ISO 13849 bereit. Wird die Position des Fahrzeugs für ein Sicherheitssystem benötigt, muss diese Lokalisierungs-Information jedoch mit der entsprechenden Sicherheit bereitgestellt werden.

Aus DE 10 2019 116 569 A1 ist ein Verfahren zur Lokalisierung eines Fahrzeugs auf Grundlage von LIDAR-Sensordaten bekannt. Aus DE 10 2018 205 142 A1 ist ein weiteres Verfahren zur Bestimmung einer aktuellen Position eines Fahrzeugs auf Grundlage von Satelliten-Navigationsdaten in Kombination mit der Auswertung von Bilddaten der Fahrzeugumgebung bekannt.

Der vorliegenden Erfindung liegt ausgehend vom Stand der Technik die Aufgabe zu Grunde, eine verbesserte Methode zur sicheren Positionsermittlung zur Verfügung zu stellen.

Die vorliegende Erfindung schlägt ausgehend von der vorgenannten Aufgabe ein Verfahren zum Feststellen einer sicheren Position eines Fahrzeugs mit den Merkmalen nach Anspruch 1, eine Steuereinrichtung mit den Merkmalen nach Anspruch 6, ein Computerprogrammprodukt mit den Merkmalen nach Anspruch 7 und ein Fahrzeug mit den Merkmalen nach Anspruch 8 vor. Weitere vorteilhafte Ausgestaltungen und Weiterbildungen gehen aus den Unteransprüchen hervor.

Bei einem Verfahren zum Feststellen einer sicheren Position eines Fahrzeugs, wobei das Fahrzeug ein globales Positionsbestimmungssystem, eine inertiale Messeinheit und ein Odometriesystem aufweist, wird eine absoluten Position des Fahrzeugs mittels des globalen Positionsbestimmungssystems ermittelt. Es wird eine erste relative Position des Fahrzeugs mittels der inertialen Messeinheit ermittelt. Es wird eine zweite relative Position des Fahrzeugs mittels des Odometriesystems ermittelt. Es wird eine Sicherheit der absoluten Position ausgehend von einer Genauigkeit des globalen Positionsbestimmungssystems ermittelt. Es wird eine Sicherheit der ersten relativen Position ausgehend von einer Genauigkeit der inertialen Messeinheit ermittelt. Es wird eine Sicherheit der zweiten relativen Position ausgehend von einer Genauigkeit des Odometriesystems ermittelt.

Es wird eine aktuelle Position des Fahrzeugs ausgehend von der absoluten Position, der ersten relativen Position und der zweiten relativen Position bestimmt. Es wird eine Sicherheit für die aktuelle Position des Fahrzeugs, ausgehend von der Sicherheit der absoluten Position, von der Sicherheit der ersten relativen Position und von der Sicherheit der zweiten relativen Position, ermittelt. Es wird ein Toleranzbereichs um die aktuelle Position des Fahrzeugs herum, ausgehend von der Sicherheit der absoluten Position, von der Sicherheit der ersten relativen Position und von der Sicherheit der zweiten relativen Position bestimmt. Es eine Wahrscheinlichkeit, mit welcher sich das Fahrzeug innerhalb des Toleranzbereichs aufhält, festgestellt und anschließend ausgegeben.

Das Fahrzeug kann hierbei als Landfahrzeug ausgebildet sein. Vorzugsweise ist das Fahrzeug ein Landfahrzeug, z. B. ein PKW, NKW, Bus, People Mover, eine Landmaschine, Baumaschine o. ä. Das Fahrzeug ist dabei derart ausgeformt, dass es automatisierte Funktionen durchführen kann. Beispielsweise können automatisierte Funktionen des Fahrzeugs das autonome oder teilautonome Fahren, automatisierte Belade- und Entladevorgänge, automatisierte Arbeitsvorgänge, z. B. Ausbringen von Stoffen oder Gütern, o. ä. sein. Das Fahrzeug kann sich beispielsweise auf einem Betriebshof, auf einem Hafengelände, auf einem Flughafengelände, auf einem Firmengelände, auf einer Baustelle, auf einer landwirtschaftlichen Fläche, auf einer forstwirtschaftlichen Fläche, o.ä. bewegen. Das Fahrzeug kann z. B. automatisierte Funktionen ab Level 3 ausführen. Level 3 bezieht sich hierbei auf die Autonomielevel nach SAE J3016, welches analog auf NKWs, Busse, People Mover, Landmaschinen, Baumaschinen o. ä. angewendet werden kann.

Das Umfeld des Fahrzeugs ist definiert als unmittelbare Umgebung des Fahrzeugs, in dem dieses sich fortbewegt. Das Fahrzeug fährt entlang einer Strecke in diesem Umfeld. Beispielsweise kann das Fahrzeug sich autonom entlang der Strecke bewegen.

Das Fahrzeug weist das globale Positionsbestimmungssystem auf. Das globale Positionsbestimmungssystem dient dazu, die absolute Position des Fahrzeugs, ausgedrückt mittels globaler Koordinaten, zu bestimmen. Dazu bedient sich das globale Positionsbestimmungssystem einem globalen Satelliten-Navigationssystem, z. B. GPS, GLONASS, Galileo, Beidou o. ä. Das globale Positionsbestimmungssystem, das das Fahrzeug aufweist, ist als ein handelsübliches globales Positionsbestimmungssystem ausgeformt.

Das Fahrzeug weist außerdem die inertiale Messeinheit auf. Die inertiale Messeinheit dient dazu, die erste relative Position des Fahrzeugs zu bestimmen. Zu diesem Zweck ermittelt die inertiale Messeinheit eine Beschleunigung des Fahrzeugs sowie eine Drehrate desselben in die drei zueinander orthogonalen Raumrichtungen. Die inertiale Messeinheit des Fahrzeugs ist handelsüblich ausgeformt. Eine relative Position wird stets zu einer Ausgangsposition des Fahrzeugs bestimmt. In anderen Worten wird ermittelt, wie weit sich das Fahrzeug zum Zeitpunkt der Ermittlung der ersten relativen Position von seiner Ausgangsposition entfernt hat, um die erste relative Position zu ermitteln.

Das Fahrzeug weist außerdem das Odometriesystem auf. Das Odometriesystem dient dazu, die zweite relative Position des Fahrzeugs zu bestimmen. Zu diesem Zweck umfasst das Odometriesystem einen Lenkwinkelsensor und wenigstens einen Raddrehzahlsensor. Der Lenkwinkelsensor des Fahrzeugs sowie der wenigstens eine Raddrehzahlsensor des Fahrzeugs sind handelsüblich ausgeformt. Das Odometriesystem ermittelt somit einen Lenkwinkel des Fahrzeugs sowie die Drehzahl wenigstens eines Rades des Fahrzeugs. In anderen Worten wird ermittelt, wie weit sich das Fahrzeug zum Zeitpunkt der Ermittlung der zweiten relativen Position von seiner Ausgangsposition entfernt hat, um die zweite relative Position zu ermitteln.

In einem ersten Schritt des Verfahrens wird die absoluten Position des Fahrzeugs mittels des globalen Positionsbestimmungssystems ermittelt. Dadurch sind die globalen Koordinaten bekannt, an welchen sich das Fahrzeug zum Zeitpunkt der Ermittlung der absoluten Position befindet.

In einem zweiten Schritt, der gleichzeitig oder zeitversetzt zum ersten Schritt erfolgen kann, wird die erste relative Position des Fahrzeugs mittels der inertialen Messeinheit ermittelt. Dadurch sind ausgehend von einer Ausgangsposition des Fahrzeugs, also einer Startposition, die ersten relativen Koordinaten bekannt, an welchem sich das Fahrzeug zum Zeitpunkt der Ermittlung der relativen Position befindet. Die ersten relativen Koordinaten werden ausgehend von der Bewegung des Fahrzeugs, die mittels der inertialen Messeinheit bestimmt wird, ermittelt.

In einem dritten Schritt, der gleichzeitig oder zeitversetzt zum ersten Schritt und/oder zum zweiten Schritt erfolgen kann, wird die zweite relative Position des Fahrzeugs mittels des Odometriesystems ermittelt. Dadurch sind ausgehend von der Ausgangsposition die zweiten relativen Koordinaten bekannt, an welchem sich das Fahrzeug zum Zeitpunkt der Ermittlung der relativen Position befindet. Die zweiten relativen Koordinaten werden ausgehend von der Bewegung des Fahrzeugs, die mittels des Odometriesystems bestimmt wird, ermittelt.

In einem vierten Schritt, der sich an den ersten Schritt anschließt, wird die Sicherheit der absoluten Position ausgehend von der Genauigkeit des globalen Positionsbestimmungssystems ermittelt. Der vierte Schritt kann zeitgleich oder zeitversetzt zu dem zweiten Schritt und/oder zu dem dritten Schritt erfolgen. Die Genauigkeit des globalen Positionsbestimmungssystems ist dabei abhängig von einer Anzahl an Satelliten, auf die das globalen Positionsbestimmungssystem zurückgreifen kann. Zusätzlich kann auch RTK-Vermessung genutzt werden. Damit lassen sich auch atmosphärische oder gezielte Verfälschungen des Signals erkennen, wodurch die Genauigkeit des globalen Positionsbestimmungssystems bestimmt werden kann. Bei einer Minimalanzahl von Satelliten ist die Genauigkeit geringer als bei einer höheren Anzahl von Satelliten. Die Minimalanzahl ist aus dem Stand der Technik bekannt und beträgt vier Satelliten. Die Genauigkeit des globalen Positionsbestimmungssystems kann sich somit über die Zeit ändern und muss daher stets aktuell abgerufen werden.

Die Sicherheit der absoluten Position legt fest, mit welcher Wahrscheinlichkeit sich das Fahrzeug tatsächlich an der ermittelten absoluten Position befindet. Das heißt, es wird eine Messunsicherheit der Ermittlung der absoluten Position bestimmt. Methoden zur Bestimmung der Messunsicherheiten bei globalen Positionsbestimmungssystemen sind hinlänglich bekannt.

In einem fünften Schritt, der sich an den zweiten Schritt anschließt, wird die Sicherheit der ersten relativen Position ausgehend von einer Genauigkeit der inertialen Messeinheit ermittelt. Der fünfte Schritt kann zeitgleich oder zeitversetzt zu dem ersten Schritt und/oder zu dem dritten Schritt erfolgen. Die Genauigkeit der inertialen Messeinheit ist abhängig von der Genauigkeit der verwendeten Sensoren. Diese Genauigkeit ist im Datenblatt der jeweiligen Sensoren verfügbar und ändert sich nicht. Die Genauigkeit der inertialen Messeinheit kann beispielsweise in einer Speichereinrichtung des Fahrzeugs hinterlegt sein. Die Speichereinrichtung kann beispielsweise mit einer Steuereinrichtung des Fahrzeug verbunden oder Bestandteil dieser Steuereinrichtung des Fahrzeugs sein.

Die Sicherheit der ersten relativen Position legt fest, mit welcher Wahrscheinlichkeit sich das Fahrzeug tatsächlich an der ermittelten ersten relativen Position befindet. Das heißt, es wird eine Messunsicherheit der Ermittlung der ersten relativen Position bestimmt. Methoden zur Bestimmung der Messunsicherheiten bei inertialen Messeinheiten sind hinlänglich bekannt.

In einem sechsten Schritt, der sich an den dritten Schritt anschließt, wird die Sicherheit der zweiten relativen Position ausgehend von einer Genauigkeit des Odometriesystems ermittelt. Der sechste Schritt kann zeitgleich oder zeitversetzt zu dem ersten Schritt und/oder zu dem zweiten Schritt erfolgen. Die Genauigkeit des Odometriesystems ist abhängig von der Genauigkeit der verwendeten Sensoren. Diese Genauigkeit ist im Datenblatt der jeweiligen Sensoren verfügbar und ändert sich nicht. Die Genauigkeit des Odometriesystems kann beispielsweise in der Speichereinrichtung des Fahrzeugs hinterlegt sein.

Die Sicherheit der zweiten relativen Position legt fest, mit welcher Wahrscheinlichkeit sich das Fahrzeug tatsächlich an der ermittelten zweiten relativen Position befindet. Das heißt, es wird eine Messunsicherheit der Ermittlung der zweiten relativen Position bestimmt. Methoden zur Bestimmung der Messunsicherheiten bei Odometriesystemen sind hinlänglich bekannt.

Es wird in einem siebten Schritt, der sich an den ersten, zweiten und dritten Schritt anschließt, die aktuelle Position des Fahrzeugs ausgehend von der absoluten Position, der ersten relativen Position und der zweiten relativen Position bestimmt. In anderen Worten findet eine Sensordatenfusion statt, um die aktuelle Position des Fahrzeugs zu bestimmen. Die aktuelle Position wird somit durch Fusion der absoluten Position mit der ersten relativen Position und der zweiten relativen Position erhalten. Die Sensordatenfusion erfolgt mittels der Steuereinrichtung des Fahrzeugs, welche das Fahrzeug aufweist. Die Steuereinrichtung kann z. B. als ECU oder Domain-ECU ausgebildet sein. Die Steuereinrichtung ist jeweils mit dem Odometriesystem, mit der inertialen Messeinheit und mit dem globalen Positionsbestimmungssystem verbunden. Diese Verbindungen sind derart, dass ein Daten- und Signalaustausch erfolgen kann. Die Verbindungen können dabei drahtlos oder kabelgebunden ausgebildet sein. Die Steuereinrichtung erhält somit von dem globalen Positionsbestimmungssystem die absolute Position des Fahrzeugs. Zudem erhält die Steuereinrichtung von der inertialen Messeinheit die erste relative Position des Fahrzeugs. Zudem erhält die Steuereinrichtung von dem Odometriesystem die zweite relative Position des Fahrzeugs.

In einem achten Schritt, der sich an den vierten, fünften und sechsten Schritt, sowie an den siebten Schritt anschließt, wird die Sicherheit für die aktuelle Position des Fahrzeugs, ausgehend von der Sicherheit der absoluten Position, von der Sicherheit der ersten relativen Position und von der Sicherheit der zweiten relativen Position, ermittelt. Diese Ermittlung wird mittels der Steuereinrichtung durchgeführt. Die Berechnung der Sicherheit für die aktuelle Position erfolgt in der Art einer Fehlerfortpflanzung. Das heißt, dass die einzelnen Sicherheiten, die in den vorherigen Schritten ermittelt wurden, fusioniert werden, um somit eine Sicherheit für die aktuelle Position zu bestimmen. Die Sicherheit für die aktuelle Position zeigt auf, mit welcher Wahrscheinlichkeit sich das Fahrzeug tatsächlich an der aktuellen Position aufhält. Zur Berechnung der Sicherheit kann beispielsweise eine bekannte Abweichungs-Verteilung herangezogen werden, z. B. eine Gaußverteilung.

In einem neunten Schritt, der sich an den achten Schritt anschließt, wird der Toleranzbereichs um die aktuelle Position des Fahrzeugs herum bestimmt, ausgehend von der Sicherheit der absoluten Position, von der Sicherheit der ersten relativen Position und von der Sicherheit der zweiten relativen Position. Der Toleranzbereich stellt sich als physisch vorhandener Bereich dar, der sich rund um das Fahrzeug erstreckt. Beispielsweise ist der Toleranzbereich in der Art eines Umkreises ausgeformt, wobei das Fahrzeug den Mittelpunkt des Umkreises ausformt. Selbstverständlich kann der Toleranzbereich auch jegliche andere geeignete Form annehmen.

Die Erstreckung des Toleranzbereichs wird mittels der Sicherheiten der absoluten Position, der ersten relativen Position und der zweiten relativen Position ermittelt. Der Toleranzbereich kann je nach Anwendungsbereich variieren. Beispielsweise kann der Toleranzbereich einen größeren Durchmesser aufweisen, wenn die aktuelle Position des Fahrzeugs beispielsweise für sicherheitskritische Funktionen des Fahrzeugs benötigt wird, z. B. bei Absperrung eines Arbeitsbereichs rund um das Fahrzeug. Beispielsweise kann der Toleranzbereich einen kleineren Durchmesser aufweisen, wenn die aktuelle Position das Fahrzeugs exakt benötigt wird, beispielsweise bei einem Beladen des Fahrzeugs.

In einem zehnten Schritt, der sich an den achten Schritt anschließt, wird die Wahrscheinlichkeit, mit welcher sich das Fahrzeug innerhalb des Toleranzbereichs aufhält, festgestellt und anschließend ausgegeben. Dieses Feststellen erfolgt mittels der Steuereinrichtung. Es wird in anderen Worten festgestellt, wie hoch die Wahrscheinlichkeit ist, dass sich das Fahrzeug innerhalb des Toleranzbereichs befindet, wenn es sich tatsächlich an einer von der aktuellen Position abweichenden Position befindet. Somit kann zwar keine exakte aktuelle Position für das Fahrzeug bestimmt werden, es kann aber eine ungefähre Position festgestellt werden, die sich innerhalb des Toleranzbereichs befindet.

Die Wahrscheinlichkeit wird zudem anschließend an ihre Feststellung ausgegeben. Dieses Ausgeben kann beispielsweise mittels einer Anzeigeeinrichtung des Fahrzeugs erfolgen, beispielsweise mittels eines Displays.

Alternativ oder zusätzlich dazu kann die Wahrscheinlichkeit mittels einer Kommunikationseinrichtung ausgegeben werden an weitere Fahrzeugsysteme oder an externe Systeme, die zum Ansteuern ihrer Funktionsabläufe mit der aktuellen Position des Fahrzeugs arbeiten. Diese müssen somit nicht die exakte Position heranziehen, die mit Unsicherheiten behaftet ist, sondern die grobe Position ausgehend vom Toleranzbereich, an welcher sich das Fahrzeug mit der ermittelten Wahrscheinlichkeit befindet. Beispielsweise kann ein externes System, welches einen Sicherheitsbereich um den Arbeitsbereich des Fahrzeugs ausgibt, ausgehen von dem Toleranzbereich und der Wahrscheinlichkeit.

Vorteilhaft an dem hier vorgesellten Verfahren ist, dass es nicht nötig ist, die aktuelle Position des Fahrzeugs auf den Zentimeter genau zu bestimmen, um Funktionen des Fahrzeugs und/oder externer Systeme durchzuführen. Durch die Variation des Toleranzbereichs kann die erreichbare Wahrscheinlichkeit der Positionsermittlung auf den benötigten Wert festgelegt werden.

Nach einer weiterbildenden Ausführungsform weist das Fahrzeug zusätzlich wenigstens eines der folgenden Systeme zur Positionsermittlung auf: ein RFID-Transponder-System, ein LIDAR-SLAM-System, eine Kamera, ein Magnet-Tag-System. Dabei wird mittels dem wenigstens einen dieser Systeme eine jeweils Position des Fahrzeugs ermittelt. Für das wenigstens eine dieser Systeme wird dabei eine jeweils zusätzliche Sicherheit der zusätzlichen Position ermittelt wird, ausgehend von einer Genauigkeit des entsprechenden Systems. Das wenigstens eine zusätzliche System zur Positionsermittlung ist mit der Steuereinrichtung des Fahrzeugs verbunden. Diese Verbindung ist derart, dass ein Daten- und Signalaustausch erfolgen kann. Die Verbindung kann dabei kabellos oder kabelgebunden ausgeformt sein.

RFID-Transponder-Systeme, ein LIDAR-SLAM-Systeme, Kameras, oder Magnet-Tag-Systeme sind aus dem Stand der Technik bekannte Systeme zur Positionsermittlung. Beispielsweise kann mittels in einen Untergrund eingelassener RFID-Tags, Magnetschleifen oder Metallschleifen die zusätzliche Position des Fahrzeugs zu eben diesen ermittelt werden. Es ist dem Fahrzeug bekannt welcher RFID-Tag auf welcher absoluten Position ist. Zusätzlich ist eine relative Position des Fahrzeugs zu diesen RFID-Tag bekannt. Daraus lässt sich eine zusätzliche absolute Position des Fahrzeugs bestimmen. Beispielsweise kann mittels der Kamera oder mittels des LIDAR-SLAM-Systems ausgehend von einem Abbild des Umfelds des Fahrzeugs die zusätzliche Position des Fahrzeugs bestimmt werden. Die zusätzliche Position des Fahrzeugs wird in die Ermittlung der aktuellen Position des Fahrzeugs einbezogen.

Zu jedem der eben genannten zusätzlichen Systeme zur Positionsermittlung sind die entsprechenden Genauigkeiten bekannt. Beispielsweise ist die Genauigkeit des RFID-Transponder-Systems im Datenblatt der jeweiligen Sensoren, die im RFID-Transponder-System verwendet werden, verfügbar und ändert sich nicht. Die Genauigkeit des RFID-Transponder-Systems kann beispielsweise in der Speichereinrichtung des Fahrzeugs hinterlegt sein. Wiederum beispielsweise ist die Genauigkeit des LIDAR-SLAM-Systems im Datenblatt der jeweiligen Sensoren, die im LIDAR-SLAM-System verwendet werden, verfügbar und ändert sich nicht. Die Genauigkeit des LIDAR-SLAM-Systems kann beispielsweise in der Speichereinrichtung des Fahrzeugs hinterlegt sein. Wiederum beispielsweise ist die Genauigkeit der Kamera im Datenblatt der Kamera verfügbar und ändert sich nicht. Die Genauigkeit der Kamera kann beispielsweise in der Speichereinrichtung des Fahrzeugs hinterlegt sein. Wiederum beispielsweise ist die Genauigkeit des Magnet-Tag-Systems im Datenblatt der jeweiligen Sensoren, die im Magnet-Tag-System verwendet werden, verfügbar und ändert sich nicht. Die Genauigkeit des Magnet-Tag-Systems kann beispielsweise in der Speichereinrichtung des Fahrzeugs hinterlegt sein.

Ausgehend von der Genauigkeit des wenigstens einen Systems wird eine zusätzliche Sicherheit für die zusätzliche Position ermittelt. Diese zusätzliche Sicherheit fließt anschließend sowohl in die Ermittlung der Sicherheit der aktuellen Position als auch in die Festlegung des Toleranzbereichs ein.

Durch das Ermitteln der zusätzlichen Position und der zusätzlichen Sicherheit wird das Festlegen des Toleranzbereichs genauer. Des Weiteren kann die Wahrscheinlichkeit auch dann noch ausreichend genau bestimmt werden, wenn es zu einem Ausfall oder zu einer Fehlfunktion von einem der Systeme zur Ermittlung einer relativen Position kommt, z. B. der inertialen Messeinheit oder dem Odometriesystem.

Nach einer weiterbildenden Ausführungsform wird ausgehend von wenigstens einer der Positionsermittlungen und ausgehend von kinematischen Fähigkeiten des Fahrzeugs ein Fehlverhalten von wenigstens einem der Systeme zur Positionsermittlung des Fahrzeugs festgestellt und ausgegeben.

Die kinematischen Fähigkeiten des Fahrzeugs beschreiben, welche Begrenzungen die einzelnen Fahrzeugsysteme aufweisen, die an der Längs- und Querführung des Fahrzeugs beteiligt sind. Beispielsweise beschrieben die kinematischen Fähigkeiten, welche maximale Beschleunigung und Verzögerung durch das Fahrzeug umsetzbar ist, welche maximale Geschwindigkeit das Fahrzeug erreichen kann, welche Lenkwinkel minimal und maximal an den lenkbaren Achsen des Fahrzeugs einstellbar sind, welche Stoßdämpfung das Fahrzeug maximal aufweisen kann, welche Federung das Fahrzeug maximal zur Verfügung stellen kann, etc. Die kinematischen Fähigkeiten des Fahrzeugs sind unveränderbar und sind beispielsweise in der Speichereinrichtung des Fahrzeugs hinterlegt und abgespeichert.

Ein Fehlverhalten beschreibt ein Verhalten des Systems zu Positionsermittlung, welches irregulär ist. Wenn sich beispielsweise die Position des Fahrzeugs, welche durch eines der Systeme zur Positionsermittlung ermittelt wurde, derart ändert, dass dies mit den kinematischen Fähigkeiten des Fahrzeugs nicht vereinbar ist, liegt ein Fehlverhalten des Systems zur Positionsermittlung vor. Wenn beispielsweise das Odometriesystem eine Position ermittelt ausgehend von einem Lenkwinkel, der durch eine Radaufhängung des Fahrzeugs nie einstellbar wäre, liegt dies außerhalb der kinematischen Fähigkeiten des Fahrzeugs. Somit liegt ein Fehlverhalten des Odometriesystems vor. Weist ein System zur Positionsermittlung ein Fehlverhalten auf, liefert dieses noch Positionsinformationen, die allerdings nicht richtig sind.

Das Feststellen des Fehlverhaltens erfolgt mittels der Steuereinrichtung, die sich dazu eines Algorithmus bedient. Diese führt einen Vergleich durch zwischen den gespeicherten kinematischen Fähigkeiten des Fahrzeugs und der Kinematik, die durch eines der Systeme zur Positionsermittlung herangezogen wurde, um deren Positionsermittlung durchzuführen. Kommt es bei diesem Vergleich zu einer signifikanten Abweichung, die außerhalb üblicher Toleranzen liegt, stellt die Steuereinrichtung ein Fehlverhalten dieses Systems zur Positionsermittlung fest.

Bei einem festgestellten Fehlverhalten wird dies ausgegeben. Dieses Ausgeben kann beispielsweise mittels der Anzeigeeinrichtung des Fahrzeugs erfolgen, beispielweise mittels einer Warnmeldung. Alternativ oder zusätzlich dazu kann das Fehlverhalten ausgegeben werden an weitere Fahrzeugsysteme oder an externe Systeme, die zum Ansteuern ihrer Funktionsabläufe mit der aktuellen Position des Fahrzeugs arbeiten.

Nach einer weiterbildenden Ausführungsform wird ein Ausfall von wenigstens einem der Systeme zur Positionsermittlung des Fahrzeugs festgestellt und ausgegeben. Dieses Feststellen erfolgt mittels der Steuereinrichtung des Fahrzeugs. Ein Ausfall bedeutet, dass dasjenige System zur Positionsermittlung, das ausgefallen ist, keinerlei Positionsinformationen mehr ermitteln und/oder weiterleiten kann.

Beispielsweise können so Fehler mit gemeinsamer Ursache, sog. Common Cause Fehler, ermittelt werden, wie z. B. eine Unterbrechung einer Spannungsversorgung des globalen Positionsbestimmungssystems und des Odometriesystems.

Bei einem festgestellten Ausfall wird dies ausgegeben. Dieses Ausgeben kann beispielsweise mittels der Anzeigeeinrichtung des Fahrzeugs erfolgen, beispielweise mittels einer Warnmeldung. Alternativ oder zusätzlich dazu kann der Ausfall ausgegeben werden an weitere Fahrzeugsysteme oder an externe Systeme, die zum Ansteuern ihrer Funktionsabläufe mit der aktuellen Position des Fahrzeugs arbeiten.

Nach einer weiterbildenden Ausführungsform wird bei einem festgestellten Fehlverhalten und/oder bei einem festgestellten Ausfall des wenigstens einen der Systeme zur Positionsermittlung des Fahrzeugs die jeweilige ermittelte Position dieses Systems zur Positionsermittlung aus dem Bestimmen der aktuellen Position des Fahrzeugs ausgenommen. In anderen Worten fließt die Ermittlung der jeweiligen Position durch das ausgefallene oder sich fehlverhaltende Positionsermittlungssystem nicht in die Ermittlung der aktuellen Position ein. Dadurch wird verhindert, dass die ermittelte aktuelle Position des Fahrzeugs aufgrund eines zu großen Fehlers unbrauchbar ist. Des Weiteren wird verhindert, dass der Toleranzbereich eine unpassende Ausdehnung aufweist. Somit kann das Fahrzeug trotz eines Fehlverhaltens und/oder trotz eines Ausfalls eines der Systeme zur Positionsermittlung weiter betrieben werden.

Die Steuereinrichtung für das Fahrzeug ist dazu eingerichtet, mit den Systemen zur Positionsermittlung des Fahrzeugs verbunden zu sein, nämlich mit dem globalen Positionsbestimmungssystem, mit der inertialen Messeinheit und mit dem Odometriesystem, sowie ggf. mit einem oder mehreren zusätzlichen System zur Positionsermittlung. Dies wurde bereits in der vorherigen Beschreibung beschrieben. Das heißt, dass die Steuereinrichtung, wenn diese in einem Fahrzeug verwendet wird, mit den Systemen zur Positionsermittlung verbunden ist, so dass ein Daten- und Signalaustausch erfolgen kann.

Die Steuereinrichtung ist zudem mit der Anzeigeeinrichtung des Fahrzeugs und ggf. mit der Kommunikationseinrichtung des Fahrzeugs verbindbar, so dass die Wahrscheinlichkeit, mit welcher sich das Fahrzeug innerhalb des Toleranzbereichs aufhält, ausgegeben werden kann. Die Steuereinrichtung ist also mit der Anzeigeeinrichtung und ggf. mit der Kommunikationseinrichtung des Fahrzeugs verbunden, wenn die Steuereinrichtung in einem Fahrzeug verwendet wird. Diese Verbindung ist derart, dass ein Daten- und Signalaustausch erfolgen kann. Die Verbindung kann kabellos oder kabelgebunden ausgeformt sein.

Die Steuereinrichtung weist Mittel auf, um das Verfahren durchzuführen, das bereits in der vorherigen Beschreibung beschrieben wurde. Das Verfahren kann beispielsweise in Form eines Computerprogrammprodukts umgesetzt werden, welches sich Algorithmen bedient.

Das Computerprogrammprodukt umfasst Befehle, die bei einer Ausführung des Programms durch die bereits beschriebene Steuereinrichtung, das Verfahren ausführen, das ebenfalls bereits beschrieben wurde. Das Computerprogrammprodukt kann beispielsweise in Form eines Datenträgers und/oder in Form eines herunterladbaren Datenstroms verkörpert sein.

Das Fahrzeug weist die bereits beschriebene Steuereinrichtung, das globale Positionsbestimmungssystem, die inertiale Messeinheit und das Odometriesystem, wobei die Steuereinrichtung mit dem globalen Positionsbestimmungssystem, mit der inertialen Messeinheit und mit dem Odometriesystem verbunden ist, wobei das Fahrzeug dazu eingerichtet ist, automatisierte Funktionen durchzuführen. Diese automatisierten Funktionen wurden bereits beschrieben.

Anhand der im Folgenden erläuterten Figuren werden verschiedene Ausführungsbeispiele und Details der Erfindung näher beschrieben. Es zeigen:
- Fig. 1: eine schematische Darstellung eines Fahrzeugs nach einem Ausführungsbeispiel,
- Fig. 2: eine schematische Darstellung eines Verfahrens, das von dem Fahrzeug aus Fig. 1 durchgeführt wird.

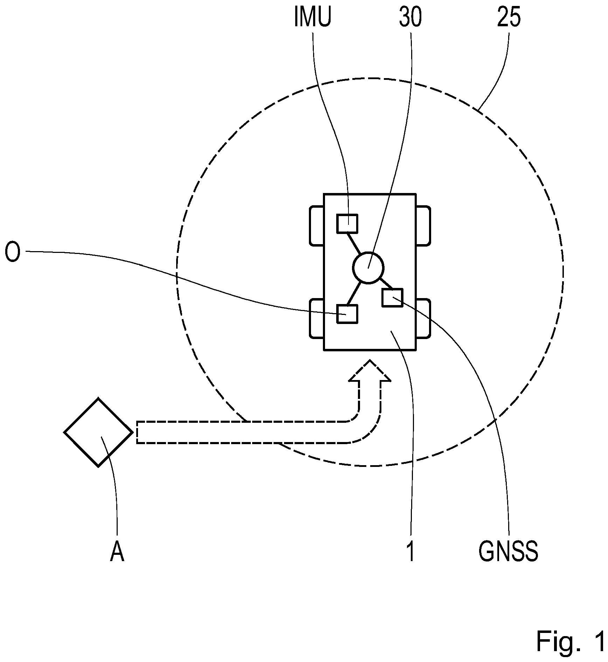

Fig. 1 zeigt eine schematische Darstellung eines Fahrzeugs 1 nach einem Ausführungsbeispiel. Das Fahrzeug 1 ist dazu eingerichtet, automatisierte Funktionen durchzuführen, beispielsweise autonom zu fahren, automatisierte Be- und Entladevorgänge durchzuführen, automatisiert Güter und Waren zu transportieren, o. ä.

Das Fahrzeug 1 weist eine Steuereinrichtung 30, ein globales Positionsbestimmungssystem GNSS, eine inertiale Messeinheit IMU und ein Odometriesystem O auf. Die Steuereinrichtung 30 ist mit dem globalen Positionsbestimmungssystem GNSS, mit der inertialen Messeinheit IMU und mit dem Odometriesystem O verbunden. Diese Verbindungen sind jeweils derart, dass ein Daten- und Signalaustausch erfolgen kann.

Das globale Positionsbestimmungssystem GNSS dient dazu, eine absolute Position 10 des Fahrzeugs 1 zu ermitteln. Diese absolute Position 10 des Fahrzeugs 1 ist vorzugsweise in Koordinaten dargestellt. Die inertiale Messeinheit IMU dient dazu, eine erste relative Position 11 des Fahrzeugs 1 zu ermitteln. Diese beschreibt die Position des Fahrzeugs 1 ausgehend von einer Ausgangsposition A. Das Odometriesystem O dient dazu, eine zweite relative Position 12 des Fahrzeugs 1 zu ermitteln. Diese beschreibt die Position des Fahrzeugs 1 ausgehend von der Ausgangsposition A.

Dabei werden die beiden relativen Positionen 11, 12 mittels voneinander verschiedenen Sensoren ermittelt. Im Falle der inertialen Messeinheit IMU können beispielsweise Drehratensensoren und Beschleunigungssensoren eingesetzt werden. Im Falle des Odometriesystems O können beispielsweise einer oder mehrere Lenkwinkelsensoren und wenigstens einen Raddrehzahlsensor eingesetzt werden.

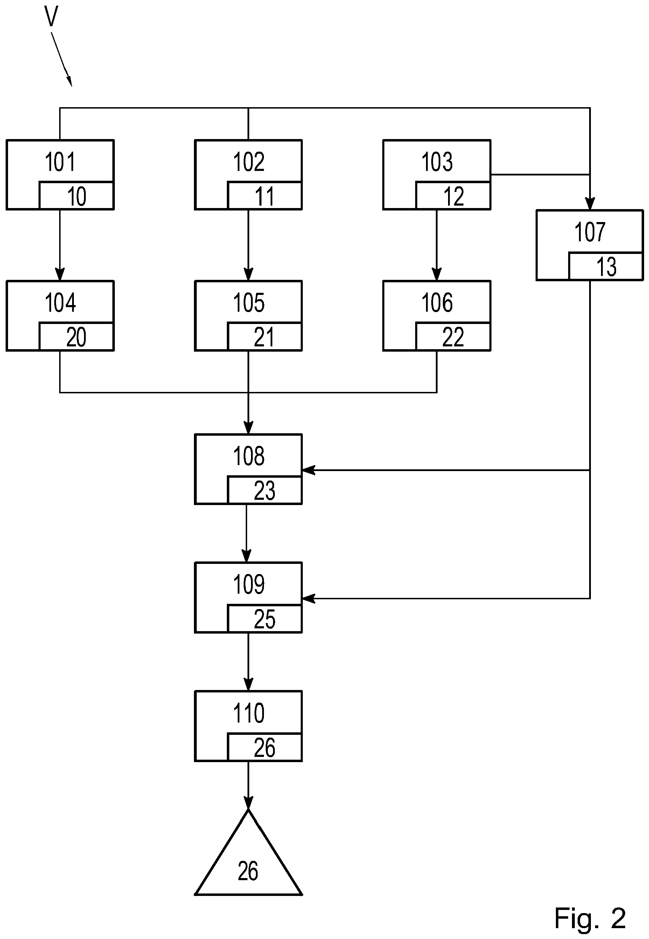

Um das Fahrzeug 1 ist ein Toleranzbereich 25 festgelegt. Der Toleranzbereichs 25 beschreibt einen physischen Bereich, in welchem sich das Fahrzeug 1 mit einer gewissen Wahrscheinlichkeit 26 aufhält. Der Toleranzbereich 25 wird mittels der Steuereinrichtung 30 festgelegt. Der Toleranzbereich 25 ist hier in der Form eines Umkreises ausgeformt. Die Steuereinrichtung 30 bestimmt außerdem die Wahrscheinlichkeit 26. Dies ist in Fig. 2 näher dargestellt.

Fig. 2 zeigt eine schematische Darstellung eines Verfahrens V, das von dem Fahrzeug 1 aus Fig. 1 durchgeführt wird. In einem ersten Schritt 101 des Verfahrens V wird die absoluten Position 10 des Fahrzeugs 1 mittels des globalen Positionsbestimmungssystems GNSS ermittelt.

In einem zweiten Schritt 102, der gleichzeitig oder zeitversetzt zum ersten Schritt 101 erfolgen kann, wird die erste relative Position 11 des Fahrzeugs 1 mittels der inertialen Messeinheit IMU ermittelt.

In einem dritten Schritt 103, der gleichzeitig oder zeitversetzt zum ersten Schritt 101 und/oder zum zweiten Schritt 102 erfolgen kann, wird die zweite relative Position 12 des Fahrzeugs 1 mittels des Odometriesystems O ermittelt.

In einem vierten Schritt 104, der sich an den ersten Schritt 101 anschließt, wird die Sicherheit 20 der absoluten Position 10 ausgehend von der Genauigkeit des globalen Positionsbestimmungssystems GNSS ermittelt. Der vierte Schritt 104 kann zeitgleich oder zeitversetzt zu dem zweiten Schritt 102 und/oder zu dem dritten 103 Schritt erfolgen. Die Genauigkeit des globalen Positionsbestimmungssystems GNSS ist dabei abhängig von einer Anzahl an Satelliten, auf die das globalen Positionsbestimmungssystem GNSS zurückgreifen kann.

In einem fünften Schritt 105, der sich an den zweiten Schritt 102 anschließt, wird die Sicherheit 21 der ersten relativen Position 11 ausgehend von einer Genauigkeit der inertialen Messeinheit IMU ermittelt. Der fünfte Schritt kann 105 zeitgleich oder zeitversetzt zu dem ersten Schritt 101 und/oder zu dem dritten Schritt 103 erfolgen. Die Genauigkeit der inertialen Messeinheit IMU ist abhängig von der Genauigkeit der verwendeten Sensoren. Diese Genauigkeit ist im Datenblatt der jeweiligen Sensoren verfügbar und ändert sich nicht.

In einem sechsten Schritt 106, der sich an den dritten Schritt 103 anschließt, wird die Sicherheit 22 der zweiten relativen Position 12 ausgehend von einer Genauigkeit des Odometriesystems O ermittelt. Der sechste Schritt 106 kann zeitgleich oder zeitversetzt zu dem ersten Schritt 101 und/oder zu dem zweiten Schritt 102 erfolgen. Die Genauigkeit des Odometriesystems O ist abhängig von der Genauigkeit der verwendeten Sensoren. Diese Genauigkeit ist im Datenblatt der jeweiligen Sensoren verfügbar und ändert sich nicht.

In einem siebten Schritt 107, der sich an den ersten Schritt 101, den zweiten Schritt 102 und dritten Schritt 103 anschließt, wird die aktuelle Position 13 des Fahrzeugs 1 ausgehend von der absoluten Position 10, der ersten relativen Position 11 und der zweiten relativen Position 12 bestimmt mittels Sensordatenfusion. Die Sensordatenfusion erfolgt mittels der Steuereinrichtung 30 des Fahrzeugs 1.

In einem achten Schritt 108, der sich an den vierten Schritt 104, den fünften Schritt 105 und sechsten Schritt 106, sowie an den siebten Schritt 107 anschließt, wird die Sicherheit 23 für die aktuelle Position 13 des Fahrzeugs 1, ausgehend von der Sicherheit 20 der absoluten Position 10, von der Sicherheit 21 der ersten relativen Position 11 und von der Sicherheit 22 der zweiten relativen Position 12, ermittelt. Diese Ermittlung wird mittels der Steuereinrichtung 30 durchgeführt. Die Berechnung der Sicherheit 23 für die aktuelle Position 13 erfolgt in der Art einer Fehlerfortpflanzung.

In einem neunten Schritt 109, der sich an den achten Schritt 108 anschließt, wird der Toleranzbereichs 25 um die aktuelle Position 13 des Fahrzeugs 1 herum bestimmt, ausgehend von der Sicherheit 20 der absoluten Position 10, von der Sicherheit 21 der ersten relativen Position 11 und von der Sicherheit 22 der zweiten relativen Position 12. Das Bestimmen des Toleranzbereichs 25 erfolgt mittels der Steuereinrichtung 30. Der Toleranzbereich 25 ist in Fig. 1 dargestellt.

In einem zehnten Schritt 110, der sich an den achten Schritt 108 anschließt, wird die Wahrscheinlichkeit 26, mit welcher sich das Fahrzeug 1 innerhalb des Toleranzbereichs 25 aufhält, festgestellt und anschließend ausgegeben. Dieses Feststellen erfolgt mittels der Steuereinrichtung 30. Das Ausgeben erfolgt z. B. mittels einer Anzeigeeinrichtung und/oder einer Kommunikationseinrichtung des Fahrzeugs, die hier nicht dargestellt sind.

### Bezugszeichen

- 1: Fahrzeug
- 10: absolute Position
- 11: erste relative Position
- 12: zweite relative Position
- 13: aktuelle Position
- 20: Sicherheit der absoluten Position
- 21: Sicherheit der erste relativen Position
- 22: Sicherheit der zweiten relativen Position
- 23: Sicherheit für die aktuelle Position
- 25: Toleranzbereich
- 26: Wahrscheinlichkeit
- 30: Steuereinrichtung

- 101: erster Schritt
- 102: zweiter Schritt
- 103: dritter Schritt
- 104: vierter Schritt
- 105: fünfter Schritt
- 106: sechster Schritt
- 107: siebter Schritt
- 108: achter Schritt
- 109: neunter Schritt
- 110: zehnter Schritt

- A: Ausgangsposition
- GNSS: globales Positionsbestimmungssystem
- IMU: inertiale Messeinheit
- O: Odometriesystem
- V: Verfahren

## Patentansprüche

1. Verfahren (V) zum Feststellen einer sicheren Position eines Fahrzeugs (1), wobei das Fahrzeug (1) ein globales Positionsbestimmungssystem (GNSS), eine inertiale Messeinheit (IMU) und ein Odometriesystem (O) aufweist, wobei das Verfahren folgende Schritte umfasst:
- Ermitteln einer absoluten Position (10) des Fahrzeugs (1) mittels des globalen Positionsbestimmungssystems (GNSS),
- Ermitteln einer ersten relativen Position (11) des Fahrzeugs (1) mittels der inertialen Messeinheit (IMU),
- Ermitteln einer zweiten relativen Position (12) des Fahrzeugs (1) mittels des Odometriesystems (O),
- Ermitteln einer Sicherheit (20) der absoluten Position (10) ausgehend von einer Genauigkeit des globalen Positionsbestimmungssystems (GNSS),
- Ermitteln einer Sicherheit (21) der ersten relativen Position (11) ausgehend von einer Genauigkeit der inertialen Messeinheit (IMU),
- Ermitteln einer Sicherheit (22) der zweiten relativen Position (12) ausgehend von einer Genauigkeit des Odometriesystems (O),
- Bestimmen einer aktuellen Position (13) des Fahrzeugs (1) ausgehend von der absoluten Position (10), der ersten relativen Position (11) und der zweiten relativen Position (12),
- Bestimmen einer Sicherheit (23) für die aktuelle Position (13) des Fahrzeugs (1), ausgehend von der Sicherheit (20) der absoluten Position (10), von der Sicherheit (21) der ersten relativen Position (11) und von der Sicherheit (22) der zweiten relativen Position (12),
- Bestimmen eines Toleranzbereichs (25) um die aktuelle Position (13) des Fahrzeugs (1) herum, ausgehend von der Sicherheit (20) der absoluten Position (10), von der Sicherheit (21) der ersten relativen Position (11) und von der Sicherheit (22) der zweiten relativen Position (12),
- Feststellen und anschließendes Ausgeben einer Wahrscheinlichkeit (26), mit welcher sich das Fahrzeug (1) innerhalb des Toleranzbereichs (25) aufhält.

2. Verfahren (V) nach Anspruch 1, wobei das Fahrzeug (1) zusätzlich wenigstens eines der folgenden Systeme zur Positionsermittlung aufweist: ein RFID-Transponder-System, ein LIDAR-SLAM-System, eine Kamera, ein Magnet-Tag-System, wobei mittels dem wenigstens einen dieser Systeme eine jeweils zusätzliche Position des Fahrzeugs ermittelt wird, und wobei für das wenigstens eine dieser Systeme eine jeweils zusätzliche Sicherheit der zusätzlichen Position ermittelt wird, ausgehend von einer Genauigkeit des entsprechenden Systems.

3. Verfahren (V) nach Anspruch 1 oder 2, wobei ausgehend von wenigstens einer der Positionsermittlungen und ausgehend von kinematischen Fähigkeiten des Fahrzeugs (1) ein Fehlverhalten von wenigstens einem der Systeme zur Positionsermittlung (GNSS; IMU; O) des Fahrzeugs (1) festgestellt und ausgegeben wird.

4. Verfahren (V) nach Anspruch 1 oder 2, wobei ein Ausfall von wenigstens einem der Systeme zur Positionsermittlung (GNSS; IMU; O) des Fahrzeugs (1) festgestellt und ausgegeben wird.

5. Verfahren (V) nach Anspruch 3 oder 4, wobei bei einem festgestellten Fehlverhalten und/oder bei einem festgestellten Ausfall des wenigstens einen der Systeme zur Positionsermittlung (GNSS; IMU; O) des Fahrzeugs (1) die jeweilige ermittelte Position (10; 11; 12) dieses Systems zur Positionsermittlung (GNSS; IMU; O) aus dem Bestimmen der aktuellen Position (13) des Fahrzeugs (1) ausgenommen wird.

6. Steuereinrichtung (30) für ein Fahrzeug (1), wobei die Steuereinrichtung (30) dazu eingerichtet ist, mit den Systemen zur Positionsermittlung (GNSS; IMU; O) des Fahrzeugs (1) verbunden zu sein, wobei die Steuereinrichtung (30) Mittel aufweist, um das Verfahren (V) nach einem der vorherigen Ansprüche durchzuführen.

7. Computerprogrammprodukt umfassend Befehle, die bei einer Ausführung des Programms durch eine Steuereinrichtung (30) nach Anspruch 6, das Verfahren (V) nach einem der Ansprüche 1 bis 5 ausführen.

8. Fahrzeug (1) aufweisend eine Steuereinrichtung (30) nach Anspruch 6, ein globales Positionsbestimmungssystem (GNSS), eine inertiale Messeinheit (IMU) und ein Odometriesystem (O), wobei die Steuereinrichtung (30) mit dem globalen Positionsbestimmungssystem (GNSS), mit der inertialen Messeinheit (IMU) und mit dem Odometriesystem (O) verbunden ist, wobei das Fahrzeug (1) dazu eingerichtet ist, automatisierte Funktionen durchzuführen.

## Claims

1. Method (V) for establishing a certain position of a vehicle (1), wherein the vehicle (1) has a global position determination system (GNSS), an inertial measurement unit (IMU) and an odometry system (O), wherein the method comprises the following steps:
- identifying an absolute position (10) of the vehicle (1) by way of the global position determination system (GNSS),
- identifying a first relative position (11) of the vehicle (1) by way of the inertial measurement unit (IMU),
- identifying a second relative position (12) of the vehicle (1) by way of the odometry system (O),
- identifying a certainty (20) of the absolute position (10) based on an accuracy of the global position determination system (GNSS),
- identifying a certainty (21) of the first relative position (11) based on an accuracy of the inertial measurement unit (IMU),
- identifying a certainty (22) of the second relative position (12) based on an accuracy of the odometry system (O),
- determining a current position (13) of the vehicle (1) based on the absolute position (10), the first relative position (11) and the second relative position (12),
- determining a certainty (23) for the current position (13) of the vehicle (1), based on the certainty (20) of the absolute position (10), on the certainty (21) of the first relative position (11) and on the certainty (22) of the second relative position (12),
- determining a tolerance range (25) around the current position (13) of the vehicle (1), based on the certainty (20) of the absolute position (10), on the certainty (21) of the first relative position (11) and on the certainty (22) of the second relative position (12),
- establishing and then outputting a probability (26) of the vehicle (1) being located within the tolerance range (25) .

2. Method (V) according to Claim 1, wherein the vehicle (1) additionally has at least one of the following position identification systems: an RFID transponder system, a LIDAR-SLAM system, a camera, a magnetic tag system, wherein the at least one of these systems is used to identify a respective additional position of the vehicle, and wherein a respective additional certainty of the additional position is identified for the at least one of these systems based on an accuracy of the corresponding system.

3. Method (V) according to Claim 1 or 2, wherein faulty behaviour of at least one of the position identification systems (GNSS; IMU; O) of the vehicle (1) is established and output based on at least one of the position identifications and based on kinematic capabilities of the vehicle (1).

4. Method (V) according to Claim 1 or 2, wherein a failure of at least one of the position identification systems (GNSS; IMU; O) of the vehicle (1) is established and output.

5. Method (V) according to Claim 3 or 4, wherein, in the event of established faulty behaviour and/or in the event of an established failure of the at least one of the position identification systems (GNSS; IMU; O) of the vehicle (1), the respective identified position (10; 11; 12) of this position identification system (GNSS; IMU; O) is excluded from the determination of the current position (13) of the vehicle (1).

6. Controller (30) for a vehicle (1), wherein the controller (30) is designed to be connected to the position identification systems (GNSS; IMU; O) of the vehicle (1), wherein the controller (30) has means for performing the method (V) according to one of the preceding claims.

7. Computer program product comprising commands that, when the program is executed by a controller (30) according to Claim 6, carry out the method (V) according to one of Claims 1 to 5.

8. Vehicle (1) having a controller (30) according to Claim 6, a global position determination system (GNSS), an inertial measurement unit (IMU) and an odometry system (O), wherein the controller (30) is connected to the global position determination system (GNSS), to the inertial measurement unit (IMU) and to the odometry system (O), wherein the vehicle (1) is designed to perform automated functions.

## Revendications

1. Procédé (V) d'établissement d'une position sûre d'un véhicule (1), le véhicule (1) comportant un système de positionnement par satellites (GNSS), une unité de mesure inertielle (IMU) et un système d'odométrie (O), le procédé comprenant les étapes suivantes :
- détecter une position absolue (10) du véhicule (1) à l'aide du système de positionnement par satellites (GNSS),
- détecter une première position relative (11) du véhicule (1) à l'aide de l'unité de mesure inertielle (IMU),
- détecter une deuxième position relative (12) du véhicule (1) à l'aide du système d'odométrie (O),
- détecter une certitude (20) de la position absolue (10) sur la base d'une précision du système de positionnement par satellites (GNSS),
- détecter une certitude (21) de la première position relative (11) sur la base d'une précision de l'unité de mesure inertielle (IMU),
- détecter une certitude (22) de la deuxième position relative (12) sur la base d'une précision du système d'odométrie (O),
- déterminer une position actuelle (13) du véhicule (1) sur la base de la position absolue (10), de la première position relative (11) et de la deuxième position relative (12),
- déterminer une certitude (23) de la position actuelle (13) du véhicule (1) sur la base de la certitude (20) de la position absolue (10), de la certitude (21) de la première position relative (11) et de la certitude (22) de la deuxième position relative (12),
- déterminer une plage de tolérance (25) autour de la position actuelle (13) du véhicule (1) sur la base de la certitude (20) de la position absolue (10), de la certitude (21) de la première position relative (11) et de la certitude (22) de la deuxième position relative (12),
- établir puis délivrer une probabilité (26) avec laquelle le véhicule (1) se situe dans la plage de tolérance (25).

2. Procédé (V) selon la revendication 1, le véhicule (1) comportant en outre au moins un des systèmes de positionnement suivants : un système transpondeur RFID, un système LIDAR-SLAM, une caméra, un système d'étiquettes magnétiques, une position supplémentaire du véhicule étant détectée au moyen de l'au moins un de ces systèmes, et une certitude supplémentaire de la position supplémentaire étant détectée pour l'au moins un de ces systèmes sur la base d'une précision du système correspondant.

3. Procédé (V) selon la revendication 1 ou 2, un dysfonctionnement d'au moins un des systèmes de positionnement (GNSS ; IMU ; O) du véhicule (1) établi et délivré en sortie sur la base d'au moins une des détections de position et sur la base des capacités cinématiques du véhicule (1).

4. Procédé (V) selon la revendication 1 ou 2, une défaillance d'au moins un des systèmes de détection de position (GNSS ; IMU ; O) du véhicule (1) étant établie et délivrée en sortie.

5. Procédé (V) selon la revendication 3 ou 4, si un dysfonctionnement est établi et/ou si une défaillance d'au moins un des systèmes de positionnement (GNSS ; IMU ; O) du véhicule (1) est établie, la position détectée respective (10 ; 11 ; 12) de ce système de positionnement (GNSS ; IMU ; O) étant alors exclue de la détermination de la position actuelle (13) du véhicule (1).

6. Dispositif de commande (30) destiné à un véhicule (1), le dispositif de commande (30) étant conçu pour être relié aux systèmes de positionnement (GNSS ; IMU ; O) du véhicule (1), le dispositif de commande (30) comportant des moyens pour mettre en œuvre le procédé (V) selon l'une des revendications précédentes.

7. Progiciel comprenant des instructions qui, lorsque le programme est exécuté par un dispositif de commande (30) selon la revendication 6, mettent en œuvre le procédé (V) selon l'une des revendications 1 à 5.

8. Véhicule (1) comportant un dispositif de commande (30) selon la revendication 6, un système de positionnement par satellites (GNSS), une unité de mesure inertielle (IMU) et un système d'odométrie (O), le dispositif de commande (30) étant relié au système de positionnement par satellites (GNSS), à l'unité de mesure inertielle (IMU) et au système d'odométrie (O), le véhicule (1) étant conçu pour exécuter des fonctions automatisées.
